# NEUE EUROPÄISCHE PATENTSCHRIFT

(11) **EP 0 873 819 B2**
(45) Veröffentlichungstag und Bekanntmachung des Hinweises auf die Entscheidung über den Einspruch: **10.08.2005**
(45) Hinweis auf die Patenterteilung: 05.06.2002
(21) Anmeldenummer: 98107149.1
(22) Anmeldetag: 20.04.1998
(51) Int. Cl.: B23Q 11/00

(54) **Transferstrasse**
Transfer line
Ligne de transfer

(30) Priorität: 22.04.1997 DE 19716811
(43) Veröffentlichungstag der Anmeldung: 28.10.1998
(73) Patentinhaber: Grob-Werke Burkhart Grob e.K., 87719 Mindelheim (DE)
(72) Erfinder: Rehm, Karl, Dipl.-Ing., 87719 Mindelheim (DE)
(74) Vertreter: Pfister, Helmut, Dipl.-Ing.

(56) Entgegenhaltungen:
- WO-A-96/00633
- DD-A- 154 071
- DE-A- 1 814 458
- DE-A- 2 504 523
- DE-A- 4 027 895
- DE-A- 4 117 723
- DE-A- 4 214 175
- DE-A- 4 221 441
- DE-A- 19 525 419
- DE-U- 9 208 735
- GB-A- 2 086 290
- JP-A- 3 149 155
- JP-A- 56 009 101
- SU-A- 1 166 965
- Prospekt der Firma Hüller Hille Gmbh "HSC in hochproduktiven Anlagen" Sonderdruck aus "Werkstatt und Betrieb" vom Juni 1996
- Sonderdruck aus " NCFertigung" Heft 2, April 1997; mit handschriftlichem Vermerk "Veröffentlichung: 7.4.97"
- Offenkundige Vorbenutzung gemäss Anlagen HE4 bis HE9, betreffend die Lieferung einer Transferstrasse

## Beschreibung

Die Erfindung betrifft eine Transferstraße zur spanabhebenden Bearbeitung von Werkstücken, wobei eine Mehrzahl von Werkzeugen mit ihren Antrieben und Führungen umfassende Bearbeitungsstationen im wesentlichen in einer Ebene hintereinander angeordnet sind und Transfereinrichtungen die Werkstücke den Bearbeitungsstationen zufördern und taktweise geradlinig durch den Bearbeitungsraum fördern, in denen die Werkstükke während der Bearbeitung von Spannvorrichtungen gehalten sind.

Transferstraßen der vorstehend angegebenen Gattung sind bekannt. Sie dienen beispielsweise dazu, im wesentlichen gleichartige Werkstücke, zum Beispiel Motorblöcke, vollautomatisch zu bearbeiten. In den einzelnen Bearbeitungsstationen der Transferstraße werden die verschiedenen Bearbeitungen durch geeignete Bearbeitungseinheiten und Werkzeuge vorgenommen. Sind die Bearbeitungsvorgänge abgeschlossen, bewegen die Transfereinrichtungen die Werkstücke im Arbeitstakt zur jeweils nächsten Bearbeitungsstation.

Für die Bearbeitungsvorgänge werden in der Regel flüssige Kühlschmierstoffe eingesetzt, die die Aufgabe haben, die Werkzeuge zu schmieren und zu kühlen und auch die abgearbeiteten Späne wegzuschwemmen. Zu diesem Zweck ist unterhalb der Werkstückförderbahn ein Kanal angeordnet, der die Späne einschließlich des Kühlmittels aufnimmt. Der Kanal kann dabei entweder im Maschinenbett oder auf dem Boden, auf dem auch die Bearbeitungsstationen aufstehen, angeordnet sein, oder es ist ein geeigneter Unterflurkanal oder Graben vorgesehen. In dem Kanal oder Graben sind dann Spanfördervorrichtungen vorgesehen, zum Beispiel Schneckenförder, Bandförder, Kratzerförderer, Klappenförderer oder auch Spüldüsen, die die Späne abtransportieren.

Der Einsatz des Kühlschmiermittels ist verhältnismäßig aufwendig. Einerseits ist eine hohe Förderleistung notwendig, andrerseits sind entsprechende Vorhalte- und Reinigungsanlagen für die Kühlschmierflüssigkeit erforderlich.

Der Erfindung liegt die Aufgabe zugrunde, die Verwendung von Kühlschmierflüssigkeit möglichst weitgehend zu vermeiden, zumal auch die Benetzung der Späne durch die Kühlschmierflüssigkeit unerwünscht ist.

Erfindungsgemäß wird diese Aufgabe dadurch gelöst, daß, ausgehend von der eingangs angegebenen Gattung, vorgeschlagen wird, daß die die Werkstücke fixierenden Spannvorrichtungen über den Werkstücken angeordnet sind und die Werkstücke beim Bearbeitungsvorgang nach unten hängen und daß unter den Werkstücken ein von Spannvorrichtungen und Bearbeitungsköpfen freigehaltener Fall- und Sammelraum für die Späne angeordnet ist.

Durch die erfindungsgemäße Anordnung entfällt die Aufgabe für die Kühlschmierflüssigkeit, die anfallenden Späne wegzuschwemmen. Soweit eine Kühlung tatsächlich notwendig ist, kann diese beispielsweise durch ein Luft-Öl-Gemisch erfolgen oder auch durch geringe Mengen einer Alkohollösung. Die Zufuhr geeigneter, geringer Flüssigkeitsmengen empfiehlt sich auch beim Bearbeiten von besonderen Werkstoffen, wie zum Beispiel von Aluminium, um einen unerwünschten Aufbau an der Schneide bzw. Verschleiß der Werkzeuge zu vermeiden.

Bei der Erfindung fallen die Späne in den Fall- und Sammelraum, der beispielsweise trichterartig ausgestaltet sein kann. In diesem Sammelraum können Transport- oder Abführeinrichtungen bekannter Art angeordnet sein, die die Späne dann mechanisch weiterfördem. Auf diese Weise wird erreicht, daß die Späne praktisch trocken anfallen, wobei beispielsweise angewandte Öl-Luft-Gemische oder Alkohollösungen rückstandsfrei verdunsten oder abgesaugt werden. Das bisherige Problem, nämlich daß sich die anfallenden Späne an den Werkzeugen, den Werkstücken, deren Träger oder Paletten bzw. an den Spanneinrichtungen, Werktischen usw. aufbauen, wird bei der Erfindung vermieden.

Der Transfer der Werkstücke bzw. der Werkstückträger von einer Bearbeitungsstation in die nächste Bearbeitungsstation kann bei der Erfindung in verschiedener Weise vorgenommen werden. Die Transfereinrichtungen können zum Beispiel Taktstangen umfassen, die von oben auf die Werkstücke bzw. die Träger einwirken. Es ist aber auch möglich, die Transfereinrichtungen unterhalb der Werkstücke anzuordnen. Die Transfereinrichtungen, beispielsweise Taktstangen, können dabei derart ausgebildet sein, daß ein Aufbauen von herabfallenden Spänen auf diesen Einrichtungen nicht möglich ist, insbesondere dadurch, daß die nach oben zeigenden Flächen dieser Einrichtungen ausreichend geneigt sind. Es ist aber auch möglich, die Transfereinrichtungen so auszubilden, daß sie beim Bearbeitungsvorgang zurückgezogen werden und somit den Spänefall nicht behindern.

Im allgemeinen sind die Werkzeuge einer Bearbeitungsstation auf einer oder auch auf beiden Seiten der Transfereinrichtung bzw. des jeweiligen Bearbeitungsraumes angeordnet. Die Führungen für die Bearbeitungseinheiten können bei der Erfindung insbesondere horizontal ausgerichtet sein, so daß die Werkzeuge seitlich an die Werkstücke herangeführt werden.

Bei einer bevorzugten Ausführungsform der Erfindung sind die Führungen der Bearbeitungseinheiten so angeordnet, daß sie mit der Horizontalen einen spitzen, nach außen offenen Winkel, vorzugsweise von 45° einschließen. Auf diese Weise gelangen die Führungen für die Bearbeitungseinheiten in einen Raum oberhalb der Werkstücke, was erhebliche Vorteile mit sich bringt. Es wird möglich, den Bearbeitungsraum seitlich durch Schilder oder Bleche abzudecken und die Durchtrittsöffnungen für die Bearbeitungsköpfe der Werkzeugmaschine sind nur im oberen Bereich anzuordnen. Damit wird sichergestellt, daß die Späne weitgehend glatte Flächen vorfinden und der Späneabtransport ohne Störungen möglich wird. Ein weiterer Vorteil dieser Anordnung besteht darin, daß es möglich wird, die gesamte Bauhöhe zu verringern. Wegen der geneigten Anordnung der Vorschubführungen verringert sich der Platzbedarf in der Horizontalen. Der zusätzliche Platzbedarf in der Vertikalen fällt nicht ins Gewicht, weil der erforderliche Raum hier ohnehin gegeben sein muß.

Wenn eingangs davon gesprochen wird, daß bei der Erfindung der Fall- und Sammelraum für die Späne von Werkzeugen und den Bearbeitungseinheiten und Führungen hierfür freigehalten ist, so schließt dies doch nicht aus, daß Hilfseinrichtungen, die für den Positionier- und Spannvorgang zweckmäßig und erforderlich sind, von unten auf die Werkstücke oder deren Träger einwirken. Für den Bearbeitungsvorgang können diese Hilfseinrichtungen dann zurückgezogen werden, so daß der Vorteil, der durch die Erfindung erhalten wird, voll gegeben ist.

Im allgemeinen empfiehlt es sich, den Bearbei- 2 tungsraum, in dem das Werkstück angeordnet ist und in dem der oder die Werkzeugköpfe hineinragen, seitlich und auch von oben durch Schilder abzudecken.

Um aufwendige Justier- und Montagearbeiten zu vermeiden, ist es günstig, wenn die Werkzeugköpfe je mit einem Schild versehen sind, der mit dem Werkzeugkopf beweglich ist und der den Spalt zu den anschließenden Schilder überdeckt. Diese Bauweise ergibt den Vorteil, daß bei der Feinjustierung der Werkzeuge bezüglich der Werkstücke der jeweilige Schild am Werkzeugkopf ebenfalls mit bewegt wird. Dieser Schild überdeckt den Spalt der den Werkzeugkopf notwendigerweise umgibt, um dessen Beweglichkeit und Justierbarkeit sicherzustellen und stellt dann den Anschluß zu den benachbarten Schildern her.

In der Zeichnung sind einige Ausführungsbeispiele der Erfindung schematisch dargestellt. Es zeigen:
- Fig. 1: einen Querschnitt durch eine Transferstraße in erfindungsgemäßer Ausbildung,
- Fig. 2: einer Variente zur Darstellung der Fig. 1,
- Fig. 3: einen Querschnittdurch eine Transferstraße in einer anderen Ausgestaltung,
- Fig. 4: eine Variante zur Darstellung der Fig. 3,
- Fig. 5: einen teilweisen Querschnitt durch eine weitere Variante und
- Fig. 6: eine schematische Draufsicht auf eine erfindungsgemäße Transferstraße in einem wesentlich kleineren Maßstab.

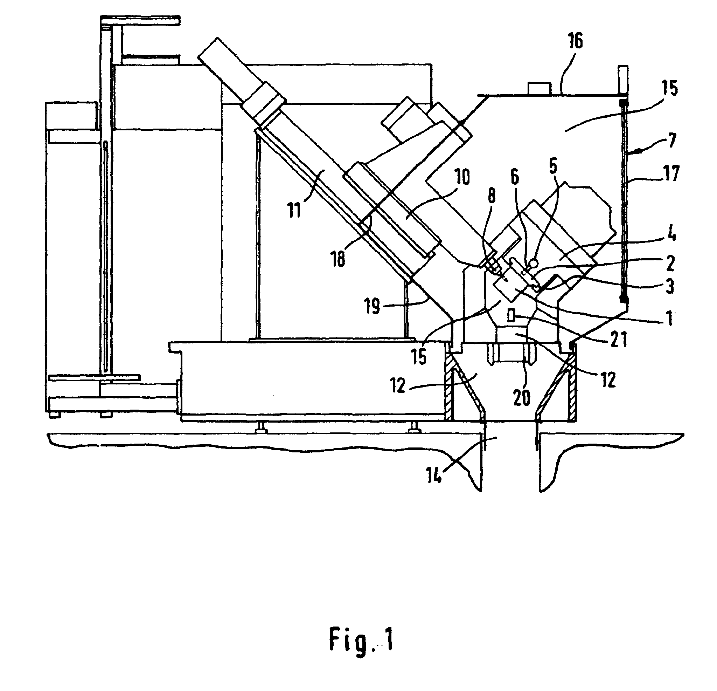

Bei der Darstellung der Fig. 1 ist das schematisch dargestellte Werkstück 1 auf einem Träger bzw. einer Palette 2 gehalten. Die Palette 2 ist in einer Führung 3 eines Rahmens oder eines Gestells 4 beweglich und kann auch an diesem Rahmen oder Gestell 4 für den Bearbeitungsvorgang positioniert und fixiert werden. Die entsprechenden Einrichtungen hierfür sind nicht näher gezeigt.

Oberhalb der Palette 2, also oberhalb auch des Werkstückes 1, kann, wie aus der Fig. 1 hervorgeht, eine Transfereinrichtung 5 in Form einer Taktstange vorgesehen sein, die beispielsweise verschwenkbar ist, so daß beim Vorschubtakt der Mitnehmer 6 die gelöste Palette 2 mitnimmt und senkrecht zur Bildebene verschiebt, so daß die nächste Bearbeitungsstation erreicht wird.

Die gezeigte Bearbeitungsstation 7 umfaßt den Bearbeitungskopf 8 an dem das Werkzeug 28 angeordnet ist. Der Schlitten 10 ist in der Führung 11 beweglich und, wie die Fig. 1 deutlich erkennen läßt, schließt die Vorschubrichtung des Schlittens 10 auf der Führung 11 mit der Horizontalen einen Winkel von ca. 45° ein. Demgemäß ist auch die Palette 2 ausgerichtet, wodurch erreicht wird, daß nicht nur die Palette 2 die zugehörigen Führungen 3 des Rahmens bzw. des Gestells 4 über dem Werkstück 1 angeordnet sind, sondern daß diese Anordnung auch für das Werkzeug 28 mit den zugehörigen Einrichtungen gilt.

Die bei der Bearbeitung anfallenden Späne können frei in den Fall- und Sammelraum 12 gelangen, an denen sich der Trichter 13 anschließt, der die Späne in einen Kanal 14 fördert, in dem eine nicht näher dargestellte Transporteinrichtung angeordnet ist.

Die Schlitten 16,17,18 und 19 begrenzen von oben und von der Seite den Bearbeitungsraum 15. Die Schilder 18 und 19 sind dabei dem Schlitten 10 und der Führung 11 angepaßt. Dadurch wird die erforderliche Beweglichkeit für den Schlitten 10 mit dem Bearbeitungskopf 8 erhalten. Die Masse der Späne erreicht ohne Schwierigkeiten den Fall- und Sammelraum 12. Die wenigen nach oben geschleuderten Späne finden in der Regel keine ebenen Flächen vor. Die Späneableitung in dem Fall- und Sammelraum 12 wird nicht gestört.

Anstelle der Taktstange 5 kann unterhalb des Werkstückes 1 eine Transfereinrichtung 21 vorgesehen sein. Diese ist für den Späneabfluß günstig gestaltet oder ragt nur während den Takten in den Bearbeitungsraum 15 hinein. Während des Bearbeitungsvorganges ist sie jedoch außerhalb des Raumes zurückgezogen. Dadurch kann beispielsweise auch die Palette 2 entfallen und das Werkstück 1 wird direkt von der Transfereinrichtung 21 getragen.

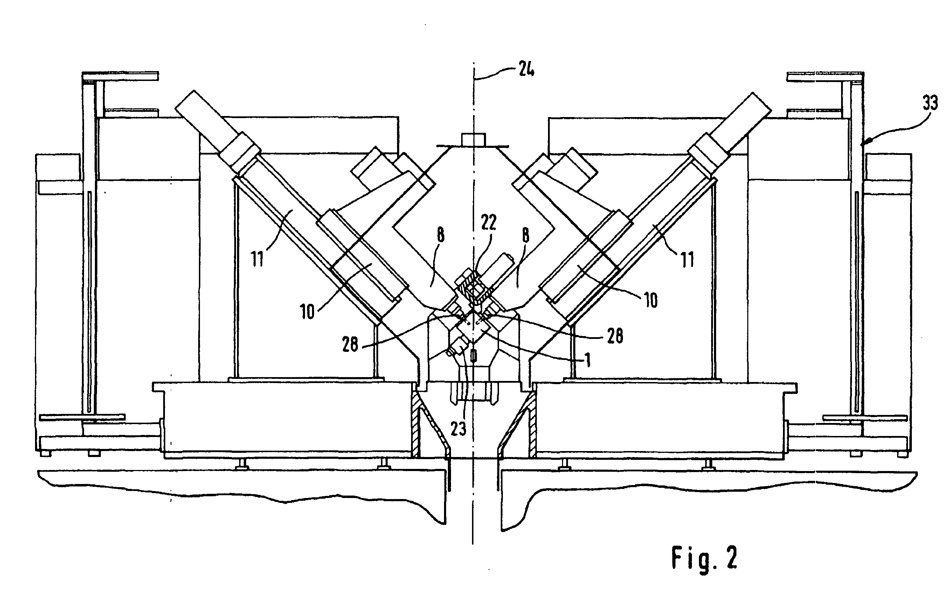

Bei der Variante nach der Fig. 2 ist das Werkstück 1 im wesentlichen in gleicher Weise in der Bearbeitungsstation 33 angeordnet. Es ist eine Spannvorrichtung 22 vorgesehen, mittels derer das Werkstück 1 beim Übergang aus der Transferstellung in die Bearbeitungsstellung angehoben und festgespannt wird. Das Ausführungsbeispiel der Fig. 2 unterscheidet sich von demjenigen nach der Fig. 1 im wesentlichen dadurch, daß zwei Bearbeitungsköpfe 8 vorgesehen sind, die durch je einen Schlitten 10 jeweils auf einer geneigten Führung 11 beweglich sind, so daß mittels der beiden Bearbeitungsköpfe 8 eine gleichzeitige Bearbeitung des Werkstückes 1 von zwei Seiten her möglich ist. Die Hilfseinrichtung 23 erleichtert den Spannvorgang und kann, falls erforderlich, für den Bearbeitungsvorgang zurückgezogen werden.

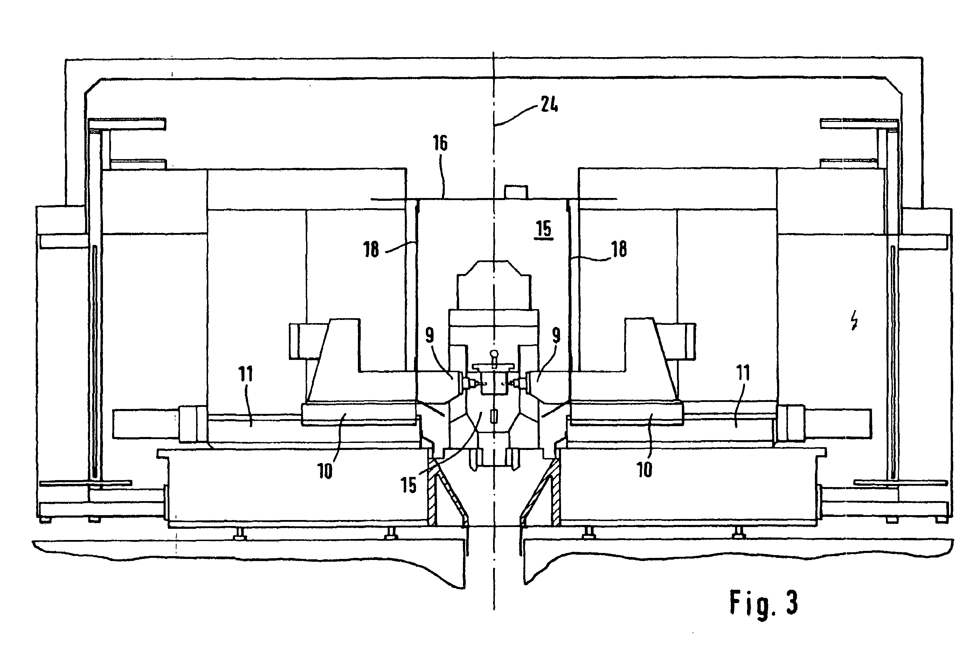

Beim Ausführungsbeispiel nach der Fig. 3 sind zwei Bearbeitungsköpfe 9 vorgesehen, die im wesentlichen gegeneinander gerichtet sind. Die Führungen 11 der zugehörigen Schlitten 10 sind im wesentlichen horizontal ausgerichtet und gegeneinander gerichtet. Auf diese Weise können gleichzeitig zwei gegenüberliegende Flächen des Werkstückes 1 bearbeitet werden, das im Ausführungsbeispiel nach der Fig. 3 von einer Palette 2 getragen wird, die symmetrisch zur Mittelachse 24 angeordnet ist. Die Schilder 18 bewegen sich mit den Bearbeitungseinheiten mit und decken den Bearbeitungsraum 15 seitlich ab.

Das Schild 16 deckt den Bearbeitungsraum 15 nach oben ab. Für die Bearbeitungsköpfe 9 sind in den Schildern 18 entsprechende Ausnehmungen vorgesehen.

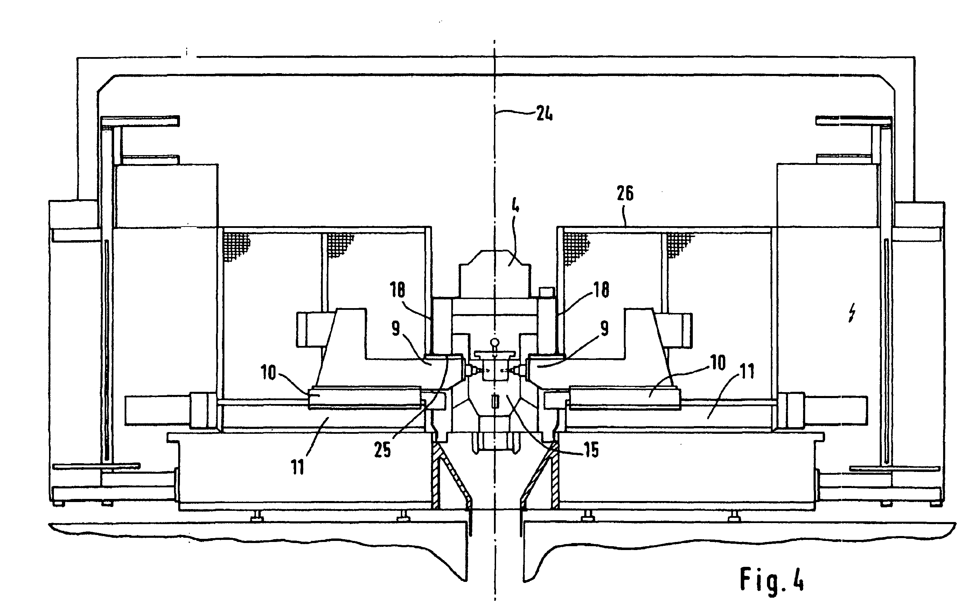

Beim Ausführungsbeispiel nach der Fig. 4 ist der Bearbeitungsraum 15 verkleinert. Teile des Rahmens bzw. Gestelles 4 sind außerhalb des Bearbeitungsraumes 15 angeordnet. Für die Bearbeitungsköpfe 9 sind in den Schildern 18 geeignete Ausnehmungen für rohrförmige, mit dem jeweiligen Bearbeitungskopf 9 bewegliche Schilder25 vorgesehen. Die Schutzgitter 26 decken die Führungen 11 und die Schlitten 10 ab.

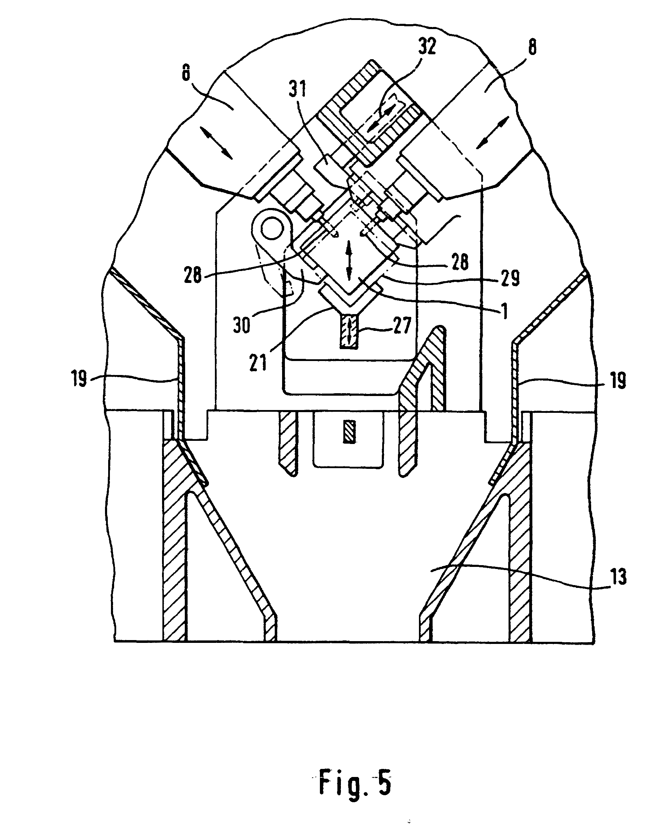

Die Variante der Erfindung gemäß Fig. 5 zeigt zwei geneigt angeordnete Bearbeitungsköpfe 8, die die Werkzeuge 28 tragen, mit denen das schematisch dargestellte Werkstück 1 bearbeitet wird. Unter dem Werkstück ist eine Transfereinrichtung 21 vorgesehen, die in vertikaler Richtung (siehe Doppelpfeil 27) bewegbar ist, so daß das Werkstück 1 aus einer abgesenkten Transferstellung in eine angehobene Spannstellung gebracht werden kann, in der die Bearbeitung erfolgt. Die abgesenkte Stellung ist dabei mit strichpunktierten Linien 29 angedeutet. Zur Fixierung und Positionierung in der angehobenen Bearbeitungsstellung dient ein verschwenkbarer Spannhebel 30 sowie eine weitere Spanneinrichtung 31, die in Richtung des Doppelpfeiles 32 beweglich ist.

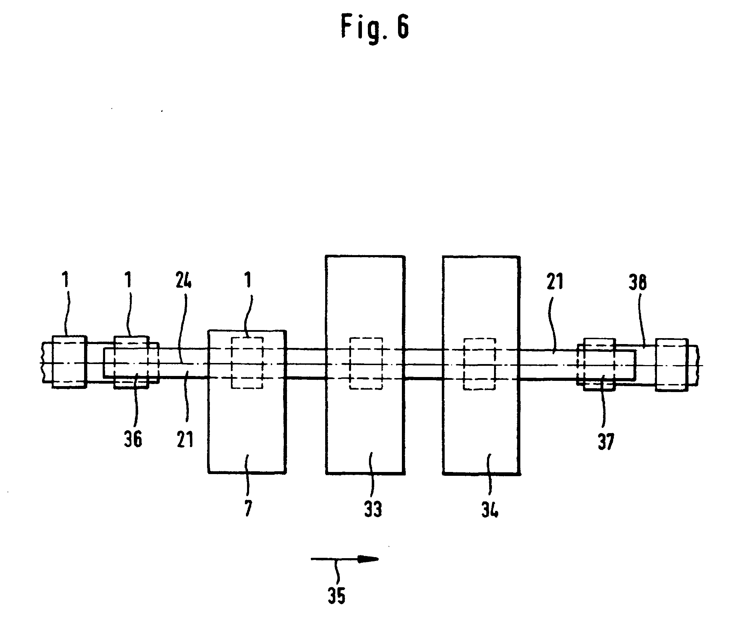

Bei der in Fig. 6 schematisch dargestellten Transferstraße sind drei Bearbeitungsstationen 7,33 und 34 hintereinander angeordnet. Der Pfeil 35 gibt die Durchlaufrichtung für die Werkstücke 1 an. Diese Werkstücke werden zunächst bei 36 mit der schematisch dargestellten Transfereinrichtung 21 verbunden, derartig, daß die Werkstücke 1 von der Transfereinrichtung nach unten hängen. Die Transfereinrichtung 21 transportiert die Werkstücke taktweise durch die einzelnen Bearbeitungsstationen, bis sie bei 37 von der Transfereinrichtung 21 abgenommen und auf eine Weiterfördereinrichtung 38 aufgesetzt werden.

## Patentansprüche

1. Transferstraße zur spanabhebenden Bearbeitung von Werkstücken, wobei eine Mehrzahl von Werkzeugen mit ihren Antrieben und Führungen umfassende Bearbeitungsstationen im wesentlichen in einer Ebene hintereinander angeordnet sind und Transfereinrichtungen die Werkstücke den Bearbeitungsstationen zufördern und taktweise geradlinig durch den Bearbeitungsraum fördern, in denen die Werkstücke während der Bearbeitung von Spannvorrichtungen gehalten sind, **dadurch gekennzeichnet, daß** die die Werkstücke (1) fixierenden Spannvorrichtungen mindestens einer Bearbeitungsstation über den Werkstücken (1) angeordnet sind und die Werkstücke (1) beim Bearbeitungsvorgang nach unten hängen und daß unter den Werkstücken ein von Spannvorrichtungen und Bearbeitungsköpfen freigehaltener Fall- und Sammelraum (12) für die Späne angeordnet ist.

2. Transferstraße nach Anspruch 1, **gekennzeichnet durch** Transport- bzw. Abführeinrichtungen für die Späne im Sammelraum (12).

3. Tansferstraße nach einem oder beiden der vorhergehenden Ansprüche, **dadurch gekennzeichnet, daß** die Werkstücke (1) auf Trägern, insbesondere Paletten (2) montiert sind, die von den Spannvorrichtungen gehalten sind.

4. Transferstraße nach einem der vorhergehenden Ansprüche, **dadurch gekennzeichnet, daß** die Transfereinrichtungen, zum Beispiel Taktstangen (5) umfassen, die von oben auf die Werkstücke (1) bzw. die Paletten (2) einwirken.

5. Transferstraße nach einem der Ansprüche 1 bis 3, **dadurch gekennzeichnet, daß** die Transfereinrichtungen (21) unterhalb der Werkstücke (1) angeordnet sind.

6. Transferstraße nach einem der vorhergehenden Ansprüche, **dadurch gekennzeichnet, daß** die Transfereinrichtungen (21) nur während des Transfervorganges in den Raum unterhalb der Werkstükke (1) hineinragen.

7. Transferstraße nach einem der Ansprüche 1 bis 6, **dadurch gekennzeichnet, daß** die Vorschubführungen (11) für die Bearbeitungsköpfe (8) einer Bearbeitungsstation (7) mit der Horizontalen einen spitzen Winkel, vorzugsweise von 45° einschließen.

8. Transferstraße nach einem der vorhergehenden Ansprüche, **dadurch gekennzeichnet, daß** Hilfseinrichtungen (23), die für den Positionier- und Spannvorgang von unten auf die Werkstücke (1) einwirken, für den Bearbeitungsvorgang zurückziehbar sind.

9. Transferstraße nach einem der vorhergehenden Ansprüche, **dadurch gekennzeichnet, daß** der Bearbeitungsraum (15), in dem das Werkstück (1) angeordnet ist und in dem der oder die Bearbeitungsköpfe (9) hineinragen, seitlich und auch von oben durch Schilder (16-19) abgedeckt ist.

10. Transferstraße nach einem der vorhergehenden Ansprüche, **dadurch gekennzeichnet, daß** der bzw. die Bearbeitungsköpfe (9) je mit einem Schild (25) versehen sind der mit dem Bearbeitungskopf (9) beweglich ist und den Spalt zu den anschließenden Schildern (18) überdeckt.

## Claims

1. Transfer line for the metal-removing machining of workpieces, where a plurality of tools with their machining stations comprising drives and guides are arranged substantially one after the other in one plane and transfer devices convey the workpiece to the machining stations where the workpieces are held in clamping devices during machining, and convey them clockwise straight through the machining space, **characterised in that** the clamping devices of at least one machining station which fix the workpieces (1) are arranged above the working pieces (1) and that the workpieces (1) hang down during the machining operation and that under the workpieces a falling and cutting space (12) for the cuttings, kept free of clamping devices and machining heads, is arranged.

2. Transfer line according to claim 1, **characterised by** transporting respectively discharging devices for the cuttings in the collecting space (12).

3. Transfer line according to one or both of the preceding claims **characterised in that** the workpieces (1) are mounted on supports, in particular pallets (2) which are held by the clamping devices.

4. Transfer line according to one of the preceding claims, **characterised in that** the transfer devices comprise, for example, cyclically operating bars (5) which act upon the workpieces (1) respectively the pallets (2) from above.

5. Transfer line according to one of the claims 1 to 3, **characterised in that** the transfer devices (21) are arranged under the workpieces (1).

6. Transfer line according to one of the preceding claims, **characterised in that** the transfer devices (21) project only during the transfer operation into the space under the workpieces (1).

7. Transfer line according to one of the claims 1 to 6, **characterised in that** the feeding guides (11) for the machining heads (8) of one machining station (7) include an acute angle, preferably of 45°, with the horizontal line.

8. Transfer line according to one of the preceding claims, **characterised in that** auxiliary devices (23), which act upon the workpieces (1) from underneath for the positioning and clamping operation, can be withdrawn for the machining operation.

9. Transfer line according to one of the preceding claims, **characterised in that** the machining space (15), where the workpiece (1) is arranged and into which the machining head(s) (9) project(s), is covered at the sides and also from above by shields (16-19).

10. Transfer line according to one of the preceding claims, **characterised in that** the machining head(s) (9) are provided with a shield (25) each, which is movable with the machining head (9) and covers the gap to the adjoining shields (18).

## Revendications

1. Voie de transfert prévue pour l'usinage de pièces façonnables à l'aide d'outils coupants, comprenant de nombreux outils, des commandes et des stations d'usinage avec leurs systèmes de guidage, les outils étant approximativement alignés sur un plan, les uns à la suite des autres, et les dispositifs de transfert conduisant les pièces à usiner de manière cadencée et rectiligne à travers l'espace d'usinage vers les stations d'usinage où elles sont maintenues durant l'usinage par des dispositifs de saisie, **caractérisée en ce que** les dispositifs de saisie d'au moins une station d'usinage sont situés au-dessus des pièces à usiner (1), **en ce que** ces pièces à usiner (1) pendent durant l'usinage et **en ce qu'**il existe un espace (12) prévu pour la chute et la collection de copeaux sous ces pièces à usiner dans lequel ne viennent ni dispositif de saisie, ni tête d'usinage.

2. Voie de transfert selon la revendication 1, **caractérisée par** des dispositifs de transfert et de collection des copeaux dans l'espace prévu à cet effet (12)

3. Voie de transfert selon l'une ou les deux revendications précédentes, **caractérisée en ce que** les pièces à usiner (1) sont montées sur des supports et de préférence sur des palettes (2) qui sont maintenues par les dispositifs de saisie.

4. Voie de transfert selon l'une des revendications précédentes, **caractérisée en ce que** les dispositifs de transfert comprennent par exemple des tiges (5) rythmant l'avancée en agissant par le haut sur des pièces à usiner (1) ou des palettes (2).

5. Voie de transfert selon l'une des revendications précédentes, **caractérisée en ce que** les dispositifs de transfert (21) sont situés en-dessous des pièces à usiner (1).

6. Voie de transfert selon l'une des revendications précédentes, **caractérisée en ce que** les dispositifs de transfert (21) n'occupent l'espace sous les pièces à usiner (1) que lors du transfert.

7. Voie de transfert selon l'une des revendications 1 à 6, **caractérisée en ce que** les guides d'avancement (11) des têtes d'usinage (8) d'une station d'usinage (7) forment un angle aigu avec l'horizontale et de préférence de 45°.

8. Voie de transfert selon l'une des revendications précédentes, **caractérisée en ce que** des dispositifs de soutien (23), agissant par en-dessous sur les pièces à usiner (1) en les saisissant et en les positionnant, peuvent être retirés lors de l'usinage.

9. Voie de transfert selon l'une des revendications précédentes, **caractérisée en ce que** l'espace d'usinage (15), dans lequel est située la pièce à usiner (1) et dans lequel rentrent la ou les têtes d'usinage (9), est couvert, aussi bien latéralement qu'au-dessus par des tôles (16-19).

10. Voie de transfert selon l'une des revendications précédentes, **caractérisée en ce que** la ou les têtes d'usinage (9) possèdent chacune une tôle (25) capable d'être déplacée avec la tête d'usinage (9) destinée à couvrir les fentes avec les tôles voisines (18).
